# EUROPEAN PATENT APPLICATION

(11) **EP 3 945 661 A1**
(43) Date of publication of application: **02.02.2022**
(21) Application number: 20460032.4
(22) Date of filing: 30.07.2020
(51) Int. Cl.: H02K 5/22

(54) **ELECTRIC MACHINE**

(71) Applicant: Valeo Siemens eAutomotive Germany GmbH, 91056 Erlangen (DE)
(72) Inventor: ZYREK, Damian, 34-326 Pietrzykowice (PL); BÜTTNER, Steffen, 97618 Wülfershausen (DE); CHRAPKIEWICZ, Miroslaw, 34-116 Spytkowice (PL); MYNARSKI, Jakub, 43-300 Bielsko-Biala 19/6 (PL)
(74) Representative: Dr. Gassner & Partner mbB

(57) **Abstract**

Electric machine (6), comprising a housing (7, 17), in which a stator and a rotatable rotor are accommodated, wherein an opening of the interior of the electric machine (6) into which cables (9, 18) enter is closed, wherein the opening is closed by a cover (1, 12) which is attachable to the opening and adapted to seal the opening and the cables (9, 18).

## Description

The invention relates to an electric machine, comprising a housing in which a stator and a rotatable rotor are accommodated.

One application for such conventional electric machines is driving an electric vehicle or a hybrid vehicle. Usually, the electric machine is an electric motor comprising the stator and the rotor, which are accommodated within the housing. An opening between the interior of the motor and the terminal box has to be sealed in order to reach a certain degree of watertightness, which is difficult to reach as high voltage cables are bent in this area. This sealing prevents liquids and objects from entering the interior of the motor, e.g. in case of a service event, when a terminal box cover is demounted.

The object of the present invention is to provide an alternative, in particular an improved electric machine.

This object is solved by means of an electric machine, comprising a housing, in which a stator and a rotatable rotor are accommodated, wherein an opening of the interior of the electric machine into which cables enter is closed, whereby the opening is closed by a cover which is attachable to the opening and adapted to seal the opening and the cables. This enables a proper sealing which is located in a certain distance from the area where the high voltage cables are bent. The inventive solution may have the advantage that the cover can be manufactured relatively cost efficiently.

According to a preferred embodiment the cover comprises an all-round seal. When the cover is provided with an all-round seal, the desired degree of protection against intrusion, dust and humidity can be achieved.

According to a preferred embodiment the seal is made from a silicone material, preferably from a silicone rubber or a silicone foam.

According to a preferred embodiment the cover is made from a plastic material, preferably from polypropylene. The cover can be produced by injection molding. It is advantageous that the cover is removably attached to the opening as it can be removed in case access to the interior of the electric machine is necessary.

According to a preferred embodiment the cover is attached to the opening by screws. According to an alternative preferred embodiment the cover is attached to the opening by clips. Attaching and fixing the cover by clips simplifies the assembly process as no tools are required.

According to a preferred embodiment the clips are formed as elastic legs, whereby an end section of a leg is provided with an outwardly projecting protrusion. A protrusions can engage in a recess, in an undercut or behind an edge of a wall of the opening of the motor's interior and attach the cover to the housing.

Preferably, the cover can comprise several circular segments arranged in a row, whereby their size and shape is adapted to the outer diameter and the shape of said cables. Accordingly, the shape of the cover is adapted to the shape and size of the cables to be sealed.

In addition, the present invention relates to a vehicle comprising at least one inventive electric machine being configured to drive the vehicle.

Hereinafter embodiments of the invention are explained with reference to the accompanying drawings, in which:
- Fig. 1: is a perspective view of a first embodiment of a cover for an inventive electric machine;
- Fig. 2: is a bottom view of the cover of Fig. 1;
- Fig. 3: is a perspective view of an inventive electric machine provided with the cover shown in Fig. 1 and 2;
- Fig. 4: is a perspective view of a second embodiment of a cover for an inventive electric machine;
- Fig. 5: is a bottom view of the cover of Fig. 4;
- Fig. 6: is a perspective view of an inventive electric machine provided with the cover shown in Fig. 4 and 5; and
- Fig. 7: a sectional view of a cover in the installed state.

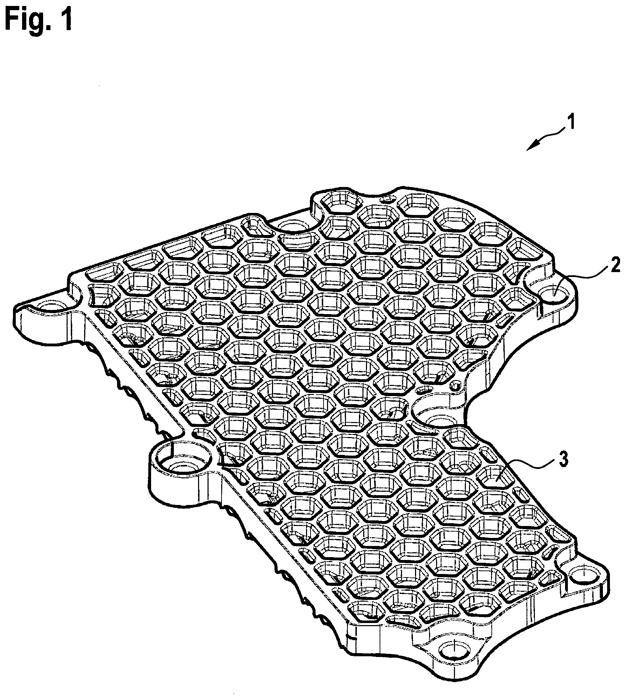

A first embodiment of an electric machine is shown in Fig. 1 to 3. Fig. 1 is a perspective upper view of a cover 1 which is adapted for closing an opening of the interior of an electric machine. In the present embodiment the cover 1 is flat and has a number of through holes 2 for screws at its periphery. The upper side of the cover 1 comprises a number of identical hexagonal recesses 3 which are arranged regularly and which contribute to decrease the weight of the cover 1. The cover 1 is made from polypropylene by injection molding.

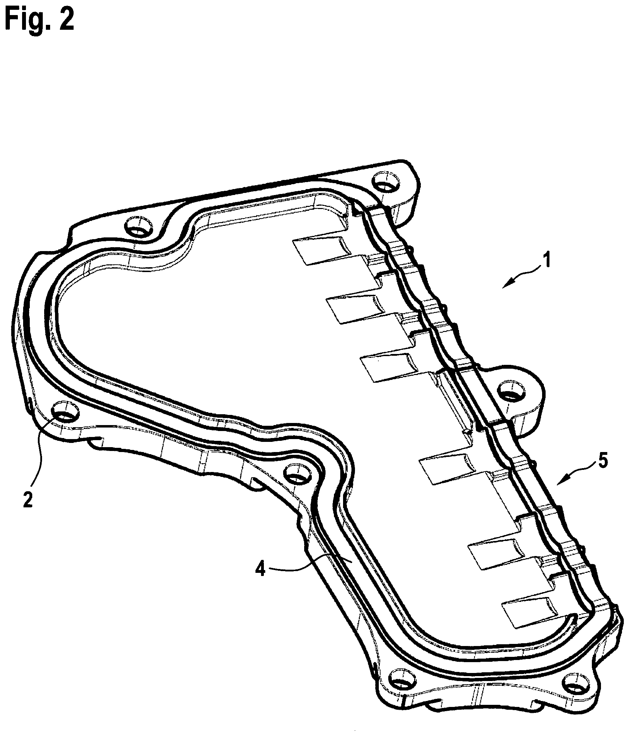

Fig. 2 is a bottom view of the cover 1. An all-round seal 4 extends along the circumference of the cover 1. Most of the sealing plane is flat, however, a portion 5 of the sealing plane is adapted to the outer shape of cables which enter the opening of the interior of the electric machine. Accordingly, the portion 5 of the sealing plane consists of a number of adjacent circular sections.

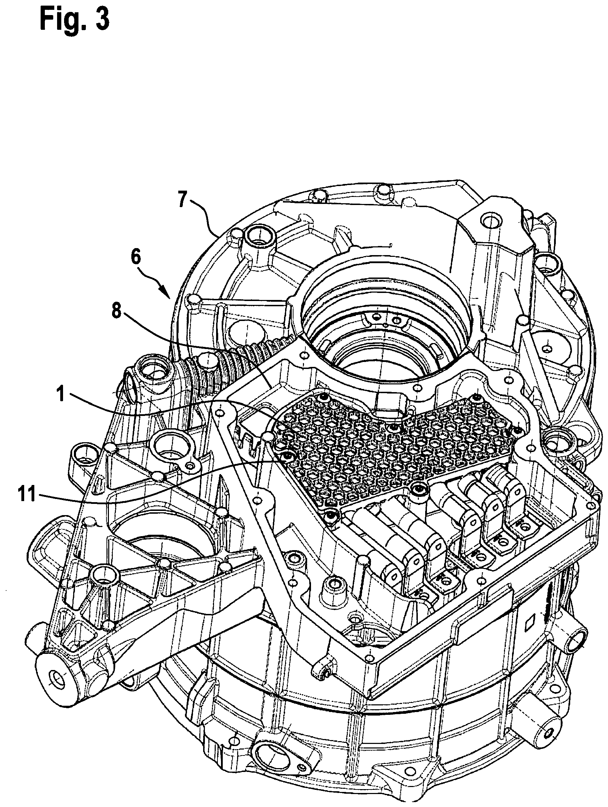

Fig. 3 is a perspective view of an electric machine 6, which is adapted for driving an electric vehicle. The electric machine 6 comprises a stator housing 7. In this view a cover of a terminal box 8 has been removed so that several cables 9 with cable terminals 10 are visible. The cables 9 enter into the opening of the interior of the electric machine 6 which is covered by the cover 1. Several screws 11 are inserted in through holes 2 arranged along the periphery of the cover 1 fixing the cover 1 to the stator housing 7. The cover 1 completely seals the opening and prevents liquids and any objects from coming into the interior of the electric machine 6 during a service event, when the terminal box is demounted, as shown in Fig. 3. As the shape of the portion 5 of the cover 1 is adapted to the outer contour of the cables 9 the opening is also tightly sealed in the area where the cables 9 enter the opening. By removing the screws 11 the cover 1 can be removed from the opening, if necessary.

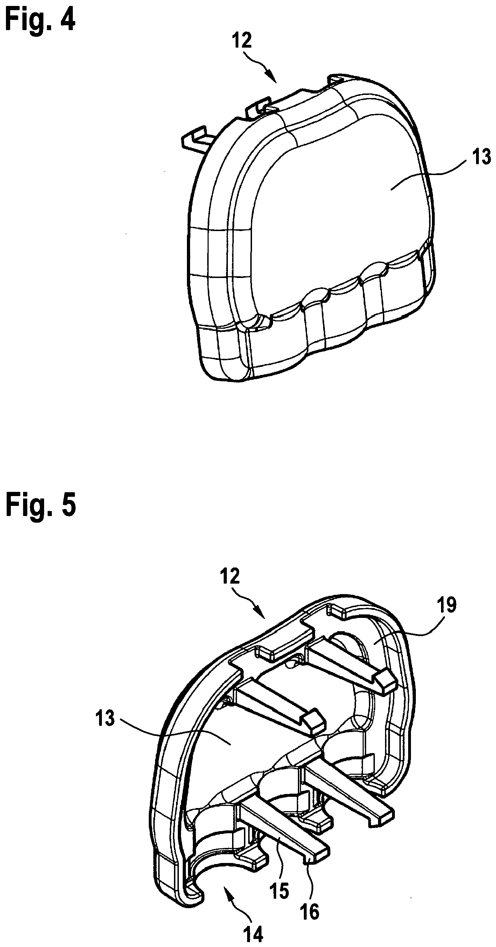

A second embodiment is depicted in Fig. 4 to Fig. 7. Fig. 4 shows the upper side of a cover 12, Fig. 5 is a bottom view of the cover 12. The cover 12 has a base portion 13 having the shape of a rectangle, two edges of the base portion 13 are rounded. In accordance with the first embodiment the cover 12 comprises a portion 14 which is adapted to the outer shape of cables consisting of a number of adjacent circular sections. The cover 12 is made from a plastic material.

In the bottom view of Fig. 5 it is visible that the cover 12 comprises four legs 15 which extend inside approximately perpendicular from the base portion 13. Each end section of a leg 15 is provided with an outwardly projecting protrusion 16. Two legs 15 point to one direction and the other legs 15 point to the opposite direction. Due to their length and cross-section all legs 15 are elastic. An all-round seal 19 is provided at the bottom side of the cover 12.

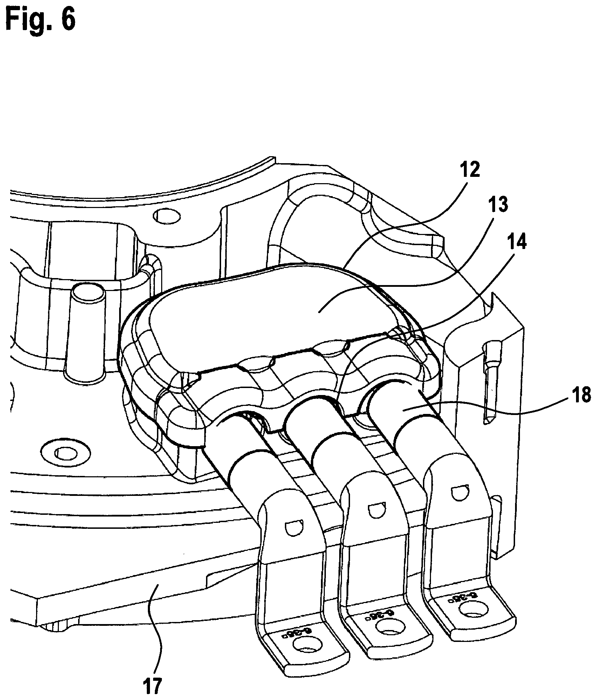

As shown in Fig. 6 the elastic legs 15 serve as clips when the cover 12 is attached to the stator housing 17. The stator housing 17 comprises an opening into which cables 18 enter. The outer shape of the cover 12 is adapted to the shape of the opening in the stator housing 17, which is hidden in Fig. 6 by the cover 12. When the cover 12 is attached to the stator housing 17, the legs 15 are slightly deformed elastically so that they can pass the opening. Subsequently the legs 15 revert elastically to their original shape and clamp the cover 12.

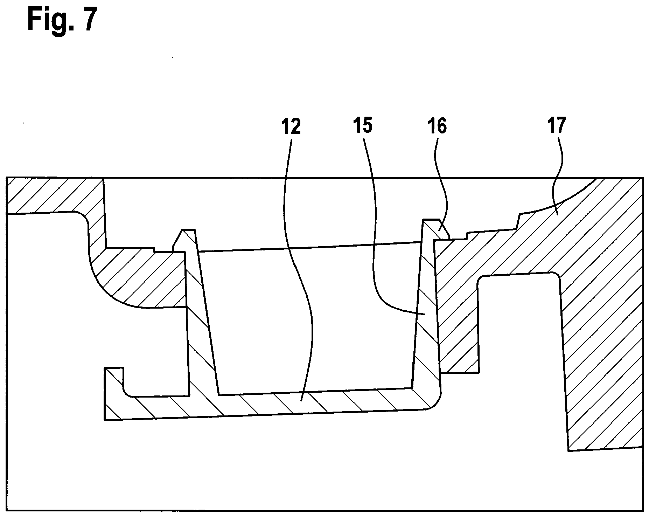

In the sectional view of Fig. 7 one can see that in the installed state the protrusions 16 of the legs 15 reach behind an edge of the stator housing 17, so that the cover 12 is firmly attached.

## Claims

1. Electric machine (6), comprising a housing (7, 17), in which a stator and a rotatable rotor are accommodated, wherein an opening of the interior of the electric machine (6) into which cables (9, 18) enter is closed, whereby the opening is closed by a cover (1, 12) which is attachable to the opening and adapted to seal the opening and the cables (9, 18).

2. Electric machine according to claim 1, wherein the cover (1, 12) comprises an all-round seal (4, 19).

3. Electric machine according to claim 2, wherein the seal (4, 19) is made from a silicone material, preferably a silicone rubber or a silicone foam.

4. Electric machine according to any of the preceding claims, wherein the cover (1, 12) is made from a plastic material, preferably from polypropylene (PP).

5. Electric machine according to any of the preceding claims, wherein the cover (1, 12) is removably attached to the opening.

6. Electric machine according to any of the preceding claims, wherein the cover (1) is attached to the opening by screws (11).

7. Electric machine according to any of the preceding claims, wherein the cover (12) is attached to the opening by clips.

8. Electric machine according to claim 7, wherein the clips are formed as elastic legs (15) and an end section of a leg (15) is provided with an outwardly projecting protrusion (16).

9. Electric machine according to any of the preceding claims, wherein the cover (1, 12) comprises several segments of a circle arranged in a row, whereby their size and shape is adapted to the outer diameter of said cables (9, 18).

10. Vehicle, comprising at least one electric machine (6) according to any of claims 1 to 9 being configured to drive the vehicle.
